# EUROPEAN PATENT APPLICATION

(11) **EP 2 980 774 A1**
(43) Date of publication of application: **03.02.2016**
(21) Application number: 15177748.9
(22) Date of filing: 21.07.2015
(51) Int. Cl.: G08G 5/00

(54) **SYSTEMS AND METHODS FOR AVERTING OVERWEIGHT AIRCRAFT LANDING CIRCUMSTANCES**

(30) Priority: 30.07.2014 US 201414446947
(71) Applicant: Honeywell International Inc., Morris Plains, NJ 07950 (US)
(72) Inventor: MOHAN, Rajeev, Morristown, NJ New Jersey 07962-2245 (US); HAGEN, Joel, Morristown, NJ New Jersey 07962-2245 (US); JANARDHANAN, Bhalakrishnan, Morristown, NJ New Jersey 07962-2245 (US)
(74) Representative: Houghton, Mark Phillip

(57) **Abstract**

The present disclosure includes a method, article of manufacture, and system for averting an overweight landing of an aircraft having a maximum landing weight (MLW). The method, article, and system may comprise, mutatis mutandis, determining a flight plan, receiving sensor data, determining, in response to the sensor data, that a predetermined event has occurred, receiving, in response to the predetermined event, an updated destination, computing, aircraft weight at the updated destination (WAD), comparing the WAD to the MLW, and/or generating, in response to the sensor data, an updated flight plan when the WAD exceeds the MLW.

## Description

### TECHNICAL FIELD

The present invention generally relates to averting overweight aircraft landing circumstances, and more particularly to the determination of aircraft fuel dissipating procedures.

### BACKGROUND

Aircraft are typically provided, prior to take off, with a quantity of fuel based upon a predetermined flight plan. In particular, aircraft are typically provided, prior to take off, with a quantity of fuel sufficient to drive the aircraft from a first location (e.g., a first airport) to a second location (e.g., a second airport). There are instances, however, in which an aircraft may be required to deviate from a predetermined flight plan.

Due to the fact that aircraft are typically provided with a quantity of fuel sufficient to drive the aircraft from a first location to a second location, such deviations may result in an overweight landing. That is, the aircraft may not, at the time the condition occurs, have dissipated fuel sufficient to avert an overweight landing.

Accordingly, systems and methods for averting an overweight landing in the case of a condition requiring deviation from a predetermined flight plan are desirable.

### BRIEF SUMMARY

The present disclosure includes a method, article of manufacture, and system for averting an overweight landing of an aircraft having a maximum landing weight (MLW). The method, article, and system may comprise, mutatis mutandis, determining a flight plan, receiving sensor data, determining, in response to the sensor data, that a predetermined event has occurred, receiving, in response to the predetermined event, an updated destination, computing, aircraft weight at the updated destination (WAD), comparing the WAD to the MLW, and/or generating, in response to the sensor data, an updated flight plan when the WAD exceeds the MLW.

Further, in various embodiments, each of the method, article, and system may compute an excess fuel value based upon the updated destination, generate the updated flight plan in response to a condition detected by at least one sensor and based upon a measurement taken by at least one sensor, and/or display the updated flight plan.

In various embodiments, the updated flight plan may include an instruction to dissipate fuel. Further, in various embodiments, the updated flight plan may include an instruction to jettison fuel, and/or instruction to enter a holding pattern.

Furthermore, other desirable features and characteristics of the [system/method] will become apparent from the subsequent detailed description and the appended claims, taken in conjunction with the accompanying drawings and the preceding background.

### BRIEF DESCRIPTION OF THE DRAWINGS

The present invention will hereinafter be described in conjunction with the following drawing figures, wherein like numerals denote like elements, and wherein:
FIG. 1 illustrates, in accordance with various embodiments, a system for averting an overweight landing;
FIG. 2 illustrates, in accordance with various embodiments, a high level overview of a process for averting an overweight landing;
FIG. 3 illustrates, in accordance with various embodiments, a process for jettisoning fuel to avert an overweight landing;
FIG. 4 illustrates, in accordance with various embodiments, a high level process for maintaining a holding pattern to dissipate excess fuel; and
FIG 5 illustrates, in accordance with various embodiments, a process for computing a holding pattern to dissipate excess fuel.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

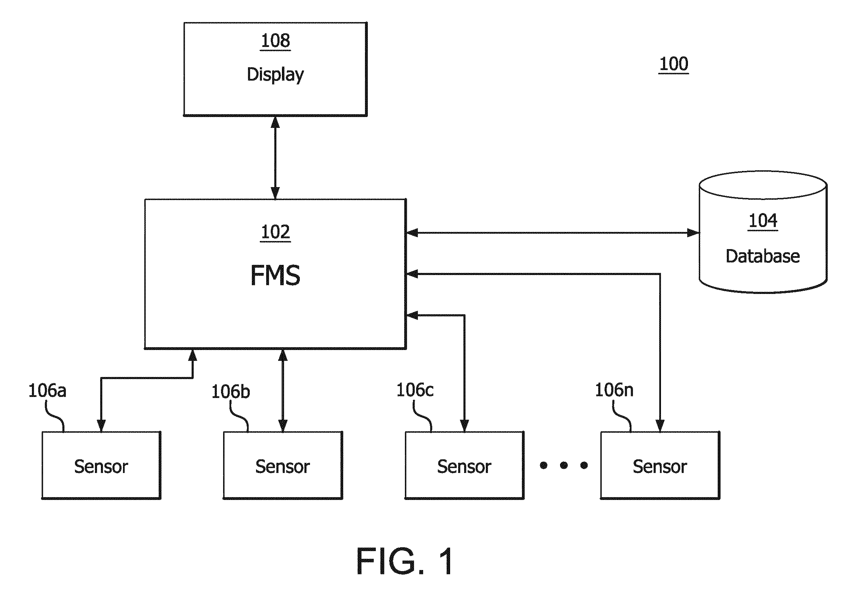

Figure 1 illustrates a system 100 for averting an overweight landing. The system 100 may comprise a Flight Management System ("FMS") 102, which may be communicatively coupled to an avionics database 104. In various embodiments, the FMS 102 may comprise one or more processors or controllers configured to receive data, as described herein, and/or perform a variety of operations, calculations, determinations, model development, etc. based upon data received by the FMS 102. The FMS 102 may be coupled to a display 108. The display 108 may receive data, as described herein, and the data received by the display 108 may be displayed for and viewable by a flight crew and/or a pilot. The display 108 may further comprise an interface with which a member of a flight crew may interact (e.g., to request updated flight plans, flight plan progress, and the like).

The avionics database 104 may comprise any non-transitory, tangible, computer-readable, storage medium, such as a solid state memory, a hard drive, and the like. The avionics database 104 may store a variety of avionics data, including, for example, a flight plan, a gross aircraft weight, a weight or amount of fuel stored within a fuel storage tank of the aircraft, a maximum landing weight ("MLW") as described herein, and the like.

The FMS 102 may be communicatively coupled to a plurality of sensors, such as sensors 106a, 106b, 106c, 106n, and the like. Each sensor 106a-106n may take any of a variety of measurements and/or detect any of a variety of conditions. For example, a sensor 106a-106n may measure a speed (e.g., an airspeed of an aircraft), an altitude of an aircraft, an amount of fuel remaining within a fuel storage tank of the aircraft, a wind speed, a tail wind speed, a head wind speed, a weather condition, and the like.

Any of the sensors 106a-106n may, in various embodiments, detect any of a variety of undesirable conditions associated with the aircraft (e.g., an engine malfunction, an unsafe cabin pressure, a passenger emergency, any of a variety of mechanical problems, such as a landing gear retraction failure, an improperly sealed aircraft door, a cracked window, an unusual trim requirement, a malfunctioning stabilizer or split flap) and the like. However, in various embodiments, a sensor 106a-106n may not detect a particular condition. Rather, a member of a flight crew may detect such a condition.

Thus, the FMS 102 may receive data supplied by any of the sensors 106a-106n and/or a member of the flight crew. As described below, the FMS 102 may process the received data to determine that a predetermined flight plan should be discarded and/or adjusted and/or recalculated. The FMS 102 may further, based upon the received data, determine or generate an updated flight plan in response to the determination that a flight plan should be discarded and/or adjusted and/or recalculated. Moreover, the FMS 102 may determine whether the updated flight plan will result, if fuel is not dissipated prior to landing, in an overweight landing by the aircraft. In response to such a determination, and as described in greater detail below, the FMS 102 may determine an amount of fuel to be dissipated (e.g., by jettisoning and/or by maintaining a holding flight pattern for a time and/or by reducing an altitude of the aircraft), a time to dissipate the amount of fuel, and the like prior to landing.

In addition, in various embodiments, a flight crew may interact with the FMS 102 to update a flight plan. For instance, in the event that it is determined that an overweight landing may occur, the flight crew may interact with the FMS 102 to generate one or more updated flight plans based, for example, upon one or more fuel jettison values, holding pattern courses, and the like.

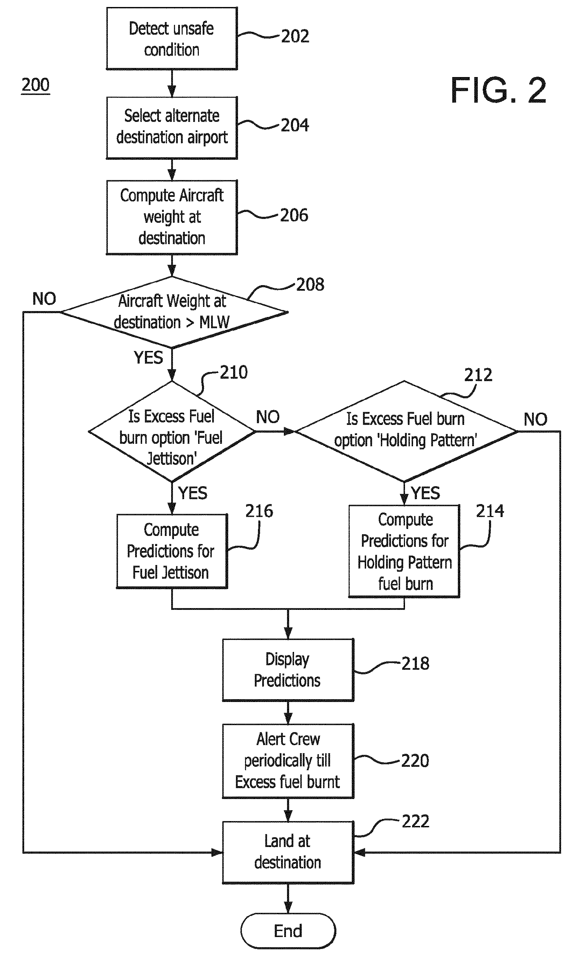

Accordingly, with reference to Figure 2, a process 200 for averting an overweight landing is shown. The process 200 describes, in broad terms, both a process for dissipating fuel by placing an aircraft in a holding flight pattern as well as a process for dissipating fuel by jettisoning fuel from the aircraft. Where fuel is jettisoned, typically, the aircraft is equipped with one or more fuel jettisoning valves or outlets capable of jettisoning fuel at a variety of rates from a fuel storage tank of the aircraft. The processor may also permit and/or enable an FMS 102 to display accurate time and/or fuel predictions at one or more designated waypoints (e.g., holding pattern endpoints) and/or in real-time as during flight.

In various embodiments, as described herein, a sensor 106a-106n may relay data to the FMS 102, whereupon the FMS 102 and/or a member of the flight crew may determine that a predetermined flight plan should be altered or recalculated. For instance, the FMS 102 may receive sensor data indicating that an undesirable condition exists (step 202). The FMS 102 and/or the flight crew interacting with the FMS 102 may, in response, recalculate or adjust a flight plan (step 204). For example, the FMS 102 and/or flight crew may select an alternate landing destination, such as an alternate airport. In an example embodiment, a flight crew may supply input data (such as a desired landing destination, an amount of fuel to dissipate, and the like), and the FMS 102 may, in response, take the action specified by the flight crew. Thus, the flight crew may, in various embodiments, specify an updated flight plan, for which the FMS 102 may recalculate data associated with the flight plan.

In various embodiments, the FMS 102 may calculate or determine a weight of the aircraft at the alternate destination. In particular, the FMS 102 may calculate or determine an amount of fuel that will be dissipated (burned) during flight to the alternate landing destination and add the weight of the remaining amount of fuel to the weight of the aircraft (e.g., a gross weight of the aircraft) (step 206). The weight of the aircraft plus fuel remaining at the alternate landing destination may be referred to herein as the "weight at destination" or "WAD."

In the event that the FMS 102 determines that the WAD may exceed the MLW (step 208) of the aircraft (the MLW being a known value, stored, in various embodiments, by the avionics database 104), the FMS 102 and/or the flight crew may determine whether to jettison fuel (step 210), whether to place the aircraft in a holding pattern (step 212), whether to descend to a lower altitude, and/or to perform any other operation that enables the aircraft to dissipate excess fuel prior to reaching the alternate landing destination.

In the alternate event that the FMS 102 determines that the WAD may not exceed the MLW of the aircraft at the time that the aircraft arrives at the alternate landing destination, the flight crew and/or FMS 102 may simply determine that it is unnecessary to dissipate fuel and continue to the alternate landing destination (step 222). Moreover, an FMS 102 and/or the flight crew may determine that an aircraft should perform or may need to perform an overweight landing (e.g., where such a landing is unavoidable). This decision may be based, for example, on data such as weather data, which may necessitate an overweight landing if, for example, a weather event will reach the aircraft prior to the time that the desired landing weight is reached.

To jettison fuel, the FMS 102 may develop, based upon instructions stored, as described herein, in a tangible, non-transitory, computer-readable medium, a fuel jettisoning model (216). The fuel jettisoning model may include a variety of data, such as, for example, a quantity of fuel to jettison, a time or times during the flight to jettison fuel (e.g., one or more "jettisoning waypoints", quantities, and the like), one or more rates at which to jettison fuel, one or more jettisoning valves or outlets to utilize, a quantity of fuel burnt by the engines while fuel is being jettisoned, and the like. Any of these data may be stored in the avionics database 104 and/or input by the flight crew. This process is described further below.

However, in response to a determination by the FMS 102 and/or the flight crew that it is preferable and/or necessary and/or beneficial (e.g., because certain aircraft lack fuel jettisoning equipment) to schedule a holding pattern, the FMS 102 and/or flight crew may develop, based upon instructions stored, as described herein, in a tangible, non-transitory, computer-readable medium, a holding pattern model (step 214). The holding pattern model may include one or more holding pattern shapes or courses, one or more holding pattern altitudes, one or more holding pattern locations ("holding pattern waypoints"), one more holding pattern durations within the updated flight plan, one or more holding pattern start times (e.g., thirty minutes into the updated flight plan, one hour into the plan, etc.), a number of holding pattern laps or courses to perform, any combination of these, and the like. This process is likewise described further below.

In either and/or both events (jettisoning and/or holding), the FMS 102 may display the holding pattern model and/or the fuel jettisoning model (and/or any other suggestion, such as descent to a lower altitude to increase a fuel dissipation rate) on a display 108 that is configured to present the one or more models and/or suggestions to a flight crew or pilot (step 218). Thus, the flight crew or pilot(s) may initiate a particular fuel dissipation procedure based upon the FMS 102 provided prediction(s). In various embodiments, the FMS 102 may display (via display 108) a lateral and/or vertical and/or lateral/vertical combination of the start and/or end points for a fuel jettisoning process. The FMS may also communicate to the display 108 a fuel quantity remaining and a time remaining to jettison excess fuel. The FMS 102 may also, in various embodiments, notify (or cause to be notified) other aircraft in the vicinity of the jettisoning aircraft that the aircraft is engaged in a jettisoning operation. The FMS 102 may, in addition, alert a flight crew to terminate a jettisoning process, such as for example, where the aircraft is flying below a minimum fuel jettisoning altitude.

The FMS 102 may monitor the status and/or progress of the updated flight plan and display this data in real-time for the flight crew. The FMS 102 may further adjust the flight plan in real-time based upon changing conditions (e.g., head wind, tail wind, unexpected or variation in modeled fuel burn quantities, and the like). This data may also be displayed for the flight crew. The FMS 102 may further, in various embodiments, periodically alert the flight crew until the quantity of excess fuel has been dissipated and an overweight landing thereby averted (220), at which point the aircraft may proceed to land (step 222) and/or the process 200 may end.

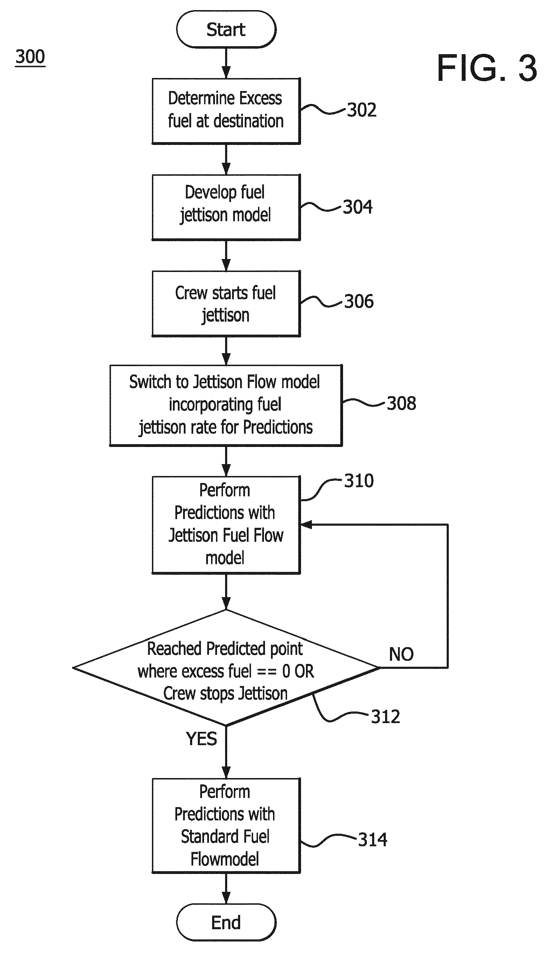

With reference now to Figure 3, a process 300 for jettisoning fuel is disclosed in additional detail. In various embodiments, the FMS 102 may determine, based upon an updated flight plan, as described above, a quantity of fuel that, if not dissipated prior to landing, will result in an overweight landing (step 302). This quantity of fuel may be referred to herein as an excess fuel value. The FMS 102 may develop the fuel jettison model based upon the excess fuel value as well as a variety of other factors (e.g., avionics data, sensor data, and the like) (step 304).

For example, the FMS 102 may, in an example embodiment, develop a fuel jettison model that directs the flight crew and/or another control system (e.g., the FMS 102) to jettison fuel at a particular rate over, for example, a particular period of time. In an example embodiment, a fuel jettison model may be stored in a database (e.g., the avionics database 104) and may, together with stored avionics data and data input by the flight crew, determine and/or calculate information to be displayed to the flight crew regarding the planned fuel jettison. The fuel jettison model may, in various embodiments, incorporate fuel flow jettison rates (e.g., per jettison valve) as well as a determined, estimated, and/or computed fuel burn rate associated with each engine. These factors may, together, permit the FMS 102 to determine a quantity of fuel that will be dissipated during a fuel jettisoning process (e.g., the amount of fuel dissipated is that amount jettisoned added to that amount burned during a jettisoning process). Accordingly, the FMS 102 may, in various embodiments, display for a flight crew an amount of fuel to be jettisoned to avoid an overweight landing.

The fuel jettison model may further instruct or indicate that the fuel be jettisoned at a particular time during the updated flight plan (step 304). The crew may, prior to the development of the jettison model, during development of the jettison model, and/or in response to receiving the jettison model, begin to jettison fuel (step 306). A control system (e.g., the FMS 102 etc.) may similarly initiate a fuel jettison. In the instance that the flight crew initiates a fuel jettison prior to receiving the jettison model, the FMS 102 may implement and display the model for the flight crew as discussed above (step 308).

Moreover, as described above, the FMS 102 may adjust or recalculate the flight plan or a prediction of the flight plan, based on the jettison model, in real-time based upon changing conditions (e.g., head wind, tail wind, unexpected or variation in modeled fuel burn quantities, and the like) (step 310). The jettison model and/or a fuel sensor may monitor the excess fuel value, and, when the excess fuel value is zero or approaching zero (meaning, for example, that the aircraft may land at a safe weight), the flight crew and/or a control system may halt the fuel jettison (step 312). An alert (audible, visual, or otherwise may be generated in response to this event). Having reached a safe landing weight, the FMS 102 may implement or switch to a standard fuel flow model (as opposed to the jettison model), which may not incorporate certain factors, such as, for example, that the aircraft is jettisoning fuel (step 314).

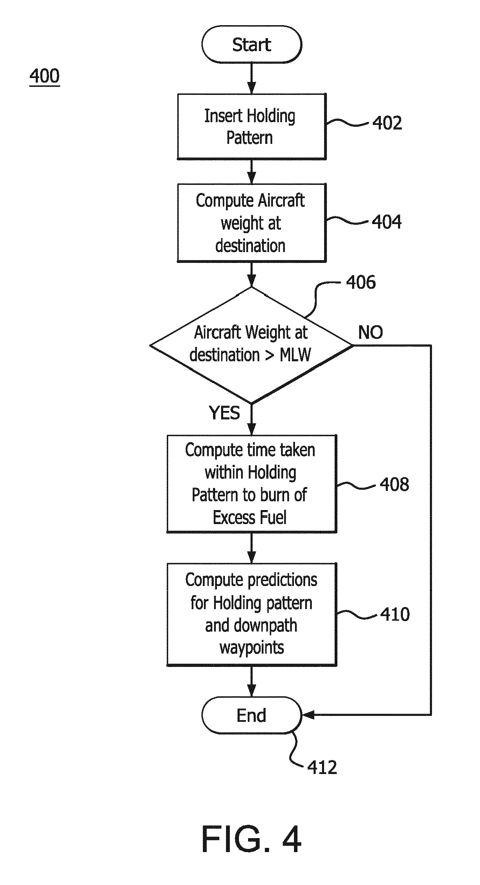

With reference now to Figure 4, a process 400 is disclosed for developing a holding pattern model in additional detail. In various embodiments, the FMS 102 may receive instructions (as from a pilot and/or an other control system) to develop a holding pattern model (step 402). The FMS 102 may determine, based upon an updated flight plan, as described above, a weight of the aircraft, if excess fuel is not dissipated, at the alternate landing destination (the WAD) (step 404). If the FMS 102 determines that the WAD will exceed the MLW, without engaging in a fuel dissipation procedure (step 406), the FMS 102 may determine a holding pattern course, time, and/or one or more locations ("down-path waypoints") within an updated flight plan that may be required or sufficient to dissipate excess fuel prior to landing at the alternate landing destination (step 408). If, however, the FMS 102 determines that the aircraft WAD may not exceed the MLW without engaging in a fuel dissipation procedure, the FMS 102 may instruct the pilot or autopilot system to proceed to the alternate landing destination absent a holding pattern. In either case (proceed directly to alternate landing destination and/or perform a holding pattern), the aircraft may land when the FMS 102 determines that the aircraft will land with a weight that does not exceed the MLW.

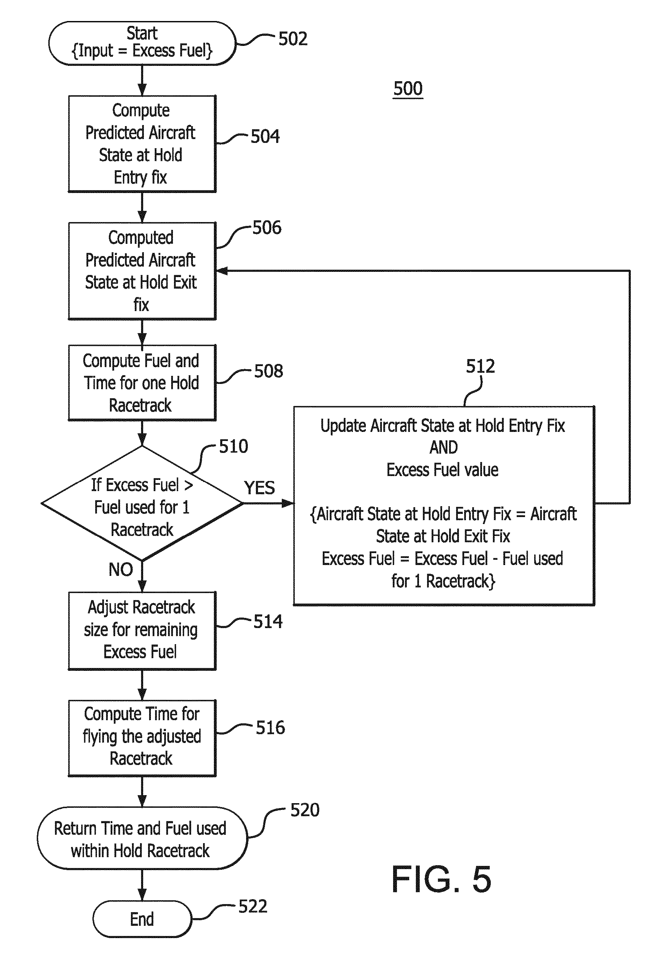

Regarding Figure 5, a process 500 for developing a holding pattern model is disclosed in finer detail. In various embodiments, and as described more generally above, the FMS 102 may determine (or receive as an input) an excess fuel value (step 502). The FMS 102 may, in addition, determine a weight of the aircraft at the start of the holding pattern (step 504). The FMS 102 may further determine, based upon data received from the avionics database 104, the MLW of the aircraft (step 506).

The FMS 102 may further, in various embodiments, determine a quantity of fuel (or an approximate quantity of fuel) that will be expended during one lap (including the time that will elapse during one lap) of a holding pattern, where the FMS 102 may generate a holding pattern model that embodies a variety of possible holding patterns and/or an optimal holding pattern based upon the excess fuel value (step 508). The FMS 102, a flight crew member, or another system may select a holding pattern from the group of possible holding patterns, if such a group exists. Otherwise, a holding pattern formulated by the FMS 102 may be selected and/or implemented.

In various embodiments, the FMS 102 may receive a value (e.g., from a fuel sensor) of an amount of fuel dissipated during a single holding pattern course (step 510). In various embodiments, the FMS 102 may compute an amount of fuel that is dissipated during a single holding pattern course by subtracting the FMS 102 computed fuel weight at the end of a first holding pattern course or racetrack from the FMS 102 computed fuel weight at the beginning of the holding pattern course or racetrack.

In the event that the FMS 102 determines that the excess fuel value continues to cause the aircraft to exceed the MLW, the FMS 102 may determine an additional holding pattern course or racetrack, which may or may not be substantially identical to the original holding pattern course (step 512). In particular, and in various embodiments, the FMS 102 may receive a remaining excess fuel value in response to completion (or partial completion) of a first holding pattern lap or course, and, in response, determine a new holding pattern course that is greater and/or lesser and/or substantially the same in distance, altitude, speed, and/or the like as the initial holding pattern course (step 514). The FMS 102 may further determine a time associated with one or more holding pattern courses, including, for example, consecutive holding pattern courses (step 516). Moreover, the FMS 102 may, in various embodiments, display a time, a fuel expenditure, a holding pattern distance, a holding pattern turn radius or course, a number of holding patterns remaining, and/or any other feature associated with a holding pattern via a display 108 that is capable of being viewed by a flight crew (step 520). In various embodiments, and in response to the dissipation and/or substantial dissipation of excess fuel (i.e., as the aircraft approaches a MLW), the aircraft may land and/or the process 500 may otherwise end (step 522).

Thus, the systems and methods described herein may permit an aircraft to avert an overweight landing event. Such an event may be variously averted, including, for example, using an FMS 102 that determines and/or formulates (including iteratively and/or in real-time) an amount of fuel to dissipate, either by jettisoning, expending during a holding pattern, reducing a flight altitude, and the like. Thus, a flight crew may not be required to estimate a jettison quantity, a holding pattern time and/or course, and the like, because the FMS 102 may more accurately predict or formulate an ideal or optimal solution and/or combination of solutions. Moreover, the FMS 102 may monitor, as described herein, the progress of a fuel dissipation process to dissipate fuel effectively and efficiently. In addition, as described herein, the FMS 102 may permit the display (e.g., via display 108) of accurate time and/or fuel predictions at one or more waypoints and/or in real-time. Moreover, as the FMS 102 continues to determine predictions, these may be transmitted to one or more airlines and/or airports (e.g., traffic control towers) in order to aid airport personnel in the management of aircraft landing and/or takeoff schedules. This may be of particular value where an air traffic pattern is substantially heavy or full and/or where ground traffic at the airport is heavy.

Accordingly, as described throughout, the FMS 102 can incorporate a variety of fuel dissipating procedures (fuel jettison, hold, combinations thereof, and the like) within the planning and predictions the FMS 102 provides to a flight crew. Moreover, the time and fuel predictions determined by the FMS 102 at a variety of waypoints and/or in real time may offer the advantage that each consecutive prediction is improved as the FMS 102 receives updated data in time. In addition, the FMS 102 described herein may offer the advantage that a workload placed on a flight crew (e.g., the work associated with guessing at a fuel jettison value/time and/or holding pattern feature(s)) is reduced, particularly where the flight crew is under stress. Further still, in various embodiments, a flight crew may determine and/or dictate to an FMS 102 where and/or when a fuel dissipation procedure will occur.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A method of averting an overweight landing of an aircraft having a maximum landing weight (MLW), the method comprising:
determining, by the computer-based flight management system, a flight plan;
receiving, by the computer-based flight management system, sensor data;
determining, by the computer-based flight management system and in response to the sensor data, that a predetermined event has occurred;
receiving, by the computer-based flight management system and in response to the predetermined event, an updated destination;
computing, by the computer-based flight management system, aircraft weight at the updated destination (WAD);
comparing, by the computer-based flight management system, the WAD to the MLW; and
generating, by the computer-based flight management system and in response to the sensor data, an updated flight plan when the WAD exceeds the MLW.

2. The method of claim 1, further comprising determining, by the computer-based flight management system and in response to an input received from a member of a flight crew, that the predetermined event has occurred, and computing, by the computer-based flight management system, an excess fuel value based upon the updated destination.

3. The method of claim 1, further comprising generating, by the computer-based flight management system, the updated flight plan in response to a condition detected by at least one sensor and based upon a measurement taken by at least one sensor.

4. The method of claim 1, further comprising displaying, by the computer-based flight management system, the updated flight plan.

5. The method of claim 1, wherein the updated flight plan includes an instruction to dissipate fuel.

6. The method of claim 1, wherein the updated flight plan includes an instruction to jettison fuel.

7. The method of claim 1, wherein the updated flight plan includes an instruction to enter into a holding pattern.

8. A flight management system for averting an overweight landing of an aircraft having a maximum landing weight, the flight management system comprising:
a processor;
a display having an interface operatively coupled to the processor;
a tangible, non-transitory, computer-readable memory communicatively coupled to the processor, the memory having instructions stored thereon that cause the processor to:
determine a flight plan;
receive sensor data;
determine, in response to the sensor data, that a predetermined event has occurred;
receive, in response to the predetermined event, an updated destination;
compute aircraft weight at the updated destination (WAD);
compare the WAD to the MLW; and
generate in response to the sensor data, an updated flight plan when the WAD exceeds the MLW.

9. The flight management system of claim 8, the processor further providing the flight plan to the display.

10. The flight management system of claim 8, the processor further generating the updated flight plan in response a condition detected by at least one sensor and based upon a measurement taken by at least one sensor.

11. The flight management system of claim 8, the processor further determining an excess fuel value based upon the WAD.

12. The flight management system of claim 8, wherein the updated flight plan includes an instruction to dissipate fuel.

13. The flight management system of claim 8, wherein the updated flight plan includes an instruction to jettison fuel.

14. The flight management system of claim 8, wherein the updated flight plan includes an instruction to enter into a holding pattern.
